# EUROPÄISCHE PATENTANMELDUNG

(11) **EP 1 072 573 A1**
(43) Veröffentlichungstag der Anmeldung: **31.01.2001**
(21) Anmeldenummer: 99114928.7
(22) Anmeldetag: 30.07.1999
(51) Int. Cl.: C04B 41/87, F23R 3/00

(54) **Verfahren zur Herstellung eines feuerfesten Bauteils und keramischer Brennkammerstein**

(71) Anmelder: SIEMENS AKTIENGESELLSCHAFT, 80333 München (DE)
(72) Erfinder: Grote, Holger, 56727 Mayen (DE); Kollenberg, Wolfgang, 53359 Rheinbach (DE); Schubert, Dirk, 53347 Alfter (DE)

(57) **Zusammenfassung**

Die Erfindung betrifft ein Verfahren zur Herstellung eines ein keramisches Baumaterial (10A) aufweisenden feuerfesten Bauteils (10) mit einem Bauteilgrundkörper (10B) bei dem ein Versiegelungsmaterial (13) in einer Suspension (30) auf dem Bauteilgrundkörper (10B) aufgebracht und daraus durch anschließendes Aushärten eine ein Ablösen von Partikeln des Bauteilmaterials (10A) mindernde Versiegelungsschicht (13) gebildet wird.

## Beschreibung

Die Erfindung betrifft ein Verfahren zur Herstellung eines ein keramisches Bauteilmaterial aufweisenden, feuerfesten Bauteils mit einem Bauteilgrundkörper. Die Erfindung betrifft auch einen keramischen Brennkammerstein einer Brennkammerauskleidung mit einem keramischen Grundkörper.

Ein Brennkammerstein einer Brennkammerauskleidung einer Gasturbinenbrennkammer ist aus der DE-A-43 43 319 bekannt. Zur Realisierung sehr hoher Eintrittstemperaturen werden die Brennkammern bei modernen Gasturbinen thermisch extrem belastbar ausgeführt. Eine thermisch besonders hoch belastbare Brennkammerausführung ist durch die Auskleidung mit keramischen Brennkammersteinen erreichbar.

In der GB-A-602 149 ist eine Brennkammerauskleidung einer Gasturbine beschrieben. Für eine zusätzliche Sicherheit gegen den Abtrag gebrochener Stücke in der feuerfesten Brennkammerauskleidung ist vorgeschlagen, diese mit einer hochtemperaturfesten Metallauskleidung zumindest teilweise zu überziehen.

In der DE 36 45 335 C2 ist eine Auskleidung für eine Brennkammer einer Gasturbine beschrieben, welche Auskleidung aus einer Mehrzahl feuerfester Steine gebildet ist und einen thermischen Schutz einer Wand der Brennkammer gegenüber einem in der Brennkammer strömenden Heißgas darstellt. Eine weitere Auskleidung einer Brennkammer mit Wandplatten ist in der EP 0 724 116 A2 beschrieben. Die Wandplatten bestehen aus einer hochtemperaturbeständigen Strukturkeramik, z. B. aus Siliciumcarbit oder Siliciumnitrid. Eine Auskleidung von Kammern oder ähnlichen Bauteilen, die einem heißen Gas ausgesetzt werden, können insbesondere auf dem Gebiet der Verbrennungstechnik, beispielsweise bei Verbrennungsöfen, statt.

Die DE 19 704 976 A1 zeigt eine Gasturbinenanlage mit einem mit Keramiksteinen ausgekleideten Brennkammergehäuse. Zur Vermeidung der Ablösung erodierender Partikel werden die Keramiksteine mit einer Beschichtung versehen, die vorzugsweise durch thermisches Plasmaspritzen aufgebracht wird.

Aufgabe der Erfindung ist die Angabe eines Verfahrens zur Herstellung eines feuerfesten Bauteils, welches insbesondere hinsichtlich der Herstellungskosten besonders günstig ist. Weitere Aufgabe der Erfindung ist die Angabe eines kostengünstig herstellbaren, feuerfesten Bauteils.

Erfindungsgemäß wird die auf ein Verfahren gerichtete Aufgabe gelöst durch ein Verfahren zur Herstellung eines, ein keramisches Bauteilmaterial aufweisenden, feuerfesten Bauteils mit einem Bauteilgrundkörper, bei dem ein Versiegelungsmaterial in einer Suspension auf den Bauteilgrundkörper aufgebracht und darauf durch anschließendes Aushärten eine Versiegelungsschicht gebildet wird, die ein Ablösen von Partikeln des Bauteilmaterials mindert.

Die Erfindung geht von der Überlegung aus, das keramische Bauteilmaterial des feuerfesten Bauteils zumindest auf einer thermisch hoch belasteten Seite des Bauteils mit einer Versiegelungsschicht zu versiegeln, die einem Abtrag von Partikeln des Bauteilmateriales entgegenwirkt. Ein solcher Abtrag kann nicht nur auf Dauer die Funktionsweise des Bauteils beeinträchtigen, er kann auch zur Beschädigung von anderen Bauteilen führen, die einer erodierenden Wirkung durch die abgetragenen Partikel ausgesetzt sind. Eine Aufbringung des die Versiegelungsschicht bildenden Versiegelungsmaterials in einer Suspension auf den Bauteilgrundkörper erweist sich nach Erkenntnis der Erfindung als besonders geeignet, um die Versiegelungsschicht zu bilden. Aufgrund von der Erfindung zugrundeliegenden Beobachtungen wurde festgestellt, daß ein Beschichten des Bauteilmateriales über ein Verdampfen oder Plasmaspritzen des Versiegelungsmateriales zu unerwünschten Materialphasen führt. Z. B. bildet sich bei einem mittels Plasmaspritzen aufgebrachten Aluminiumoxid eine instabile Gamma-Modifikation. Für eine ausreichende Langzeitstabilität der Beschichtung muß die instabile Gamma-Modifikation durch einen aufwendigen Temperprozeß in eine Alpha-Modifikation überführt werden. Durch ein Aufbringen des Versiegelungsmateriales in einer Suspension kann ohne einen schwer kontrollierbaren Aufwachsungsprozeß das Versiegelungsmaterial in der geeigneten Materialphase aufgebracht werden. Die Versiegelungsschicht wird durch ein Aushärten des Versiegelungsmaterials gebildet. Weitere Nachbehandlungsschritte sind nicht mehr notwendig, so daß sich eine gegenüber anderen Auftragungsmöglichkeiten für das Versiegelungsmaterial besonders kostengünstige Herstellung des Bauteils ergibt.

Bevorzugt wird der Suspension ein Bindemittel zugegeben, welches zementartig zu einer Härtung der Versiegelungsschicht führt. Das Bauteilmaterial enthält bevorzugt Aluminiumoxid und weiter bevorzugt Mullit.

Bevorzugt enthält das Versiegelungsmaterial ein Material welches aus der Gruppe: Carbit, Nitrid, Silicat, Oxid ausgewählt ist. Weiter bevorzugt enthält das Versiegelungsmaterial Aluminiumoxid.

Ein zementartig wirkendes Bindemittel ist beispielsweise ein Kalziumaluminat. Dieses liegt im Versiegelungsmaterial mit einem gesamten Anteil in Gew.-% von weniger als 15 %, vorzugsweise weniger als 10 % vor. Die überwiegend in Betracht kommenden Kalziumaluminate weisen die chemische Zusammensetzung CaO*nAl₂O₃ auf, wobei n führ eine Zahl zwischen 1 und 6 steht. Besonders günstig für den Einsatz als Bindemittel ist die Kalziumaluminatphase mit einem Anteil CaO und sechs Anteilen Al₂O₃ (im Folgenden als CA₆ bezeichnet). Diese Phase ist im Gegensatz zu den anderen Phasen gegenüber Wasser beständig und bildet sich oberhalb von 1400 °C.

Vorzugsweise enthält das Bauteilmaterial Spinell (MgO*Al₂O₃). Bevorzugt ist das Versiegelungsmaterial spinellhaltig.

Durch Zugabe einer Flüssigkeit, insbesondere Wasser, kann eine hydraulische Bindung zwischen dem Spinell und dem Kalziumaluminaten sowie unter den Kalziumaluminaten selbst erfolgen. Bei einer hydraulischen Bindung erfolgt die Erstarrung und Erhärtung des Versiegelungsmaterials bei Zugabe von Wasser durch die Ausbildung wasserhaltiger Minerale. Hierbei eingesetzte Phasen stammen vorzugsweise aus einem Dreistoffsystem Kalziumoxid, Siliciumoxid, Aluminiumoxid, welches allgemein als Zement bezeichnet wird. Für Anwendungen im Hochtemperaturbereich werden vor allem aluminiumoxidreiche Zemente mit Gehalten an Siliciumoxid eingesetzt. Der Gehalt an Siliciumoxid liegt hierbei vorzugsweise unter 2 Gew.-%, weiter bevorzugt unter 1 Gew.-%.

Bevorzugt erfolgt zunächst eine Formgebung für das Bauteil wobei anschließend die Versiegelungsschicht auf das Bauteil aufgebracht und die Aushärtung der Versiegelungsschicht durch einen das Bauteil sinternden Sinterungsprozeß erfolgt. Hierdurch wird ein separater Verfahrensschritt für die Aushärtung der Versiegelungsschicht eingespart, da die Aushärtung über den für das Bauteil durchzuführenden Sinterungsprozeß erfolgt.

Bevorzugtermaßen wird die Suspension auf den Bauteilgrundkörper aufgesprüht. Dies kann z.B. in einfacher Weise mit einer Sprühpistole erfolgen. Mit dem Aufsprühen wird eine besonders schnelle und gleichmäßige Aufbringung des Versiegelungsmateriales auf den Bauteilgrundkörper ermöglicht.

Vorzugsweise wird die Suspension auf den Bauteilgrundkörper aufgestrichen. In dieser Ausführungsform hat die Suspension eine pastöse Aggregatform in der sie auf den Bauteilgrundkörper aufgetragen wird. Dies ist gerade für einen zementartig wirkenden Bindemittelzusatz in der Suspension vorteilhaft.

Bevorzugtermaßen wird der Bauteilgrundkörper in die Suspension eingetaucht. Diese Möglichkeit des Aufbringens des Versiegelungsmateriales ist insbesondere bei einer großflächigen oder den Bauteilgrundkörper größtenteils umgebenden Versiegelungsschicht hinsichtlich einer schnellen und damit kostengünsigen Fertigung vorteilhaft.

Vorzugsweise wird das Bauteil als ein Brennkammerstein einer Brennkammerauskleidung ausgeführt. Wie bereits beschrieben dient eine Brennkammerauskleidung dem Schutz vor einer thermischen Überbelastung der Brennkammer. Gerade in Brennkammern werden besonders hohe, die umgebenden Materialien stark beanspruchende Temperaturen erreicht. Der Einsatz keramischer Brennkammerauskleidungen ist oft unumgänglich. Weiter bevorzugt ist das Bauteil als ein Brennkammerstein einer Brennkammerauskleidung für eine Gasturbine ausgeführt. Bei einer Gasturbine besteht eine besonders hohe Anforderung hinsichtlich der Vermeidung des Abtrags von Partikeln der Brennkammerauskleidung. Solche, in der Brennkammerauskleidung gelöste Partikel werden im Heißgastrom mitgerissen und treffen im Heißgaskanal eines nachgeschalteten Turbinenteils auf in diesem Heißgaskanal angeordnete Turbinenschaufeln. Die mit hoher Geschwindigkeit auf die Turbinenschaufel treffenden Partikel haben auf die Turbinenschaufeln eine erodierende Wirkung. Insbesondere bei komplex beschichteten Turbinenschaufeln kann durch die erodierende Wirkung eine erhebliche Verminderung der Einsatzdauer der Turbinenschaufeln eintreten. Das Aufbringen einer Versiegelungsschicht gegen den Abtrag solcher erodierender Partikel aus der Grundkammerauskleidung ist somit von großer Bedeutung. Durch das Aufbringen des Versiegelungsmaterials aus einer Suspension kann die VersiegelungsSChiCht wirksam und kostengünstig aufgebracht werden.

Erfindungsgemäß wird die auf einen Brennkammerstein gerichtete Aufgabe gelöst durch die Angabe eines keramischen Brennkammersteins einer Brennkammerauskleidung mit einem keramischen Grundkörper und einer darauf über eine Suspension aufberachten Versiegelungsschicht gegen ein Ablösen keramischer Partikel aus dem Grundkörper.

Die Vorteile eines solchen keramischen Brennkammersteins ergeben sich ensprechend den obigen Ausführungen zu den Vorteilen des Herstellungsverfahrens.

Ausführungsbeispiele der Erfindung werden anhand der Zeichnungen näher erläutert. Es zeigen teilweise schematisch und nicht maßstäblich:
- FIG 1: einen Längsschnitt durch eine Gasturbine,
- FIG 2: einen Ausschnitt eines Querschnittes durch eine Brennkammerauskleidung,
- FIG 3: das Aufstreichen einer Versiegelungsmaterial-Suspension,
- FIG 4: das Aufsprühen einer Versiegelungsmaterial-Suspension und
- FIG 5: das Eintauchen eines Bauteils in eine Versiegelungsmaterial-Suspension.

Gleiche Bezugszeichen haben in den verschiedenen Figuren die gleiche Bedeutung.

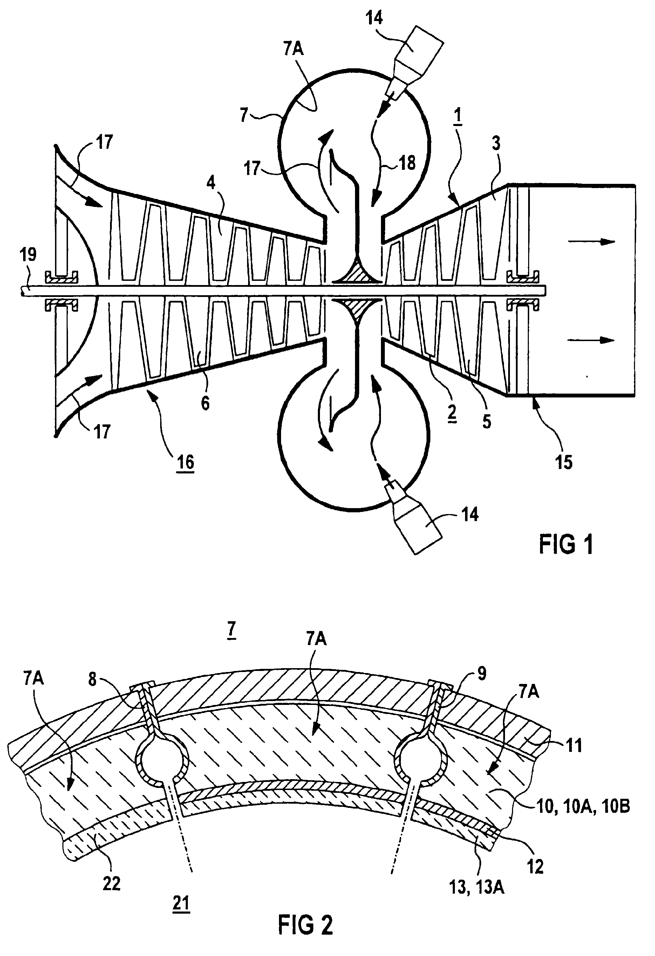

FIG 1 zeigt eine Gasturbine 1 in einem Längsschnitt. Auf einer gemeinsamen Welle 19 sind hintereinander ein Verdichter 16 und ein Turbinenteil 15 angeordnet. Zwischen dem Verdichter 16 und dem Turbinenteil 15 ist eine Ringbrennkammer 7 angeordnet. In die Ringbrennkammer 7 münden Brenner 14. Im Verdichter 16 sind aufeinander folgend abwechselnd Verdichterleitschaufeln 4 und Verdichterlaufschaufeln 6 angeordnet. Im Turbinenteil 15 sind aufeinander folgend abwechselnd Turbinenleitschaufeln 3 und Turbinenlaufschaufeln 5 angeordnet.

Im Betrieb der Gasturbine 1 wird Umgebungsluft 17 vom Verdichter 16 angesaugt und verdichtet. Die so verdichtete Luft 17 wird in die Ringbrennkammer 7 eingeleitet. Dort wird sie mit über die Brenner 14 zugeleitetem Brennstoff verbrannt. Das so erzeugte heiße Abgas 18 strömt durch das Turbinenteil 15. Dabei versetzt es die Welle 19 durch über die Turbinenschaufeln 3, 5 übertragene Kräfte in Rotation. Diese Rotation wird z. B. zur Stromerzeugung mittels eines elektrischen Generators genutzt.

Die Temperaturen in der Ringbrennkammer 7 werden außerordentlich hoch. Die Turbineneintrittstemperatur für das heiße Abgas 18 kann 1400 °C oder noch darüber betragen. Bei diesen Temperaturen wird vorteilhafterweise eine keramische Brennkammerauskleidung 7A verwendet werden. Dies wird näher anhand von FIG 2 erläutert.

In FIG 2 ist ein Ausschnitt eines Querschnittes durch eine Ringbrennkammer 7 gezeigt. An einer Tragwand 11 sind über Klammern 9 Brennkammersteine 10 mit einem jeweiligen Bauteilgrundkörper 10B wärmebeweglich befestigt. Sie bilden eine Brennkammerauskleidung 7A. Die Brennkammersteine 10 sind z. B. aus einem Bauteilmaterial 10A gebildet, welches Aluminiumoxid und Mullit enthält. Sie können auch aus einer spinellhaltigen Formmasse gegossen sein oder aus einem anderen keramischen Material bestehen. Aus der Oberfläche eines solchen keramischen Brennkammersteines 10 können sich bei einer Beaufschlagung mit Heißgas Partikel herauslösen, die nachfolgend im Heißgaskanal angeordnete Bauteile, insbesondere Turbinenschaufeln erodierend beschädigen können. Zur Vermeidung oder zumindest zur Verminderung dieser Partikelablösung sind die Brennkammersteine 10 mit einer Versiegelungsschicht 13 versehen. Diese Versiegelungsschicht 13 ist z. B. aus Aluminiumoxid gebildet. Unter Umständen kann eine Anbindungsschicht 12 aus einem geeigneten Material zwischen der Versiegelungsschicht 13 und dem keramischen Brennkammerstein 10 vorgesehen sein. Um eine hinsichtlich einer Langzeitstabilität ausreichende Qualität der Versiegelungsschicht 13 zu erhalten, ist diese aus einer Suspension 30 auf den Brennkammerstein 10 aufgetragen und ausgehärtet. Dadurch ist die Versiegelungsschicht 13 unmittelbar als Alpha-Aluminiumoxid ausgebildet und bedarf keiner weiteren Nachbehandlung. Somit ergibt sich eine besonders kostengünstige Herstellung für die Versiegelungsschicht 13. Mögliche Auftragungen für die Versiegelungsschicht 13 werden anhand der folgenden Figuren erläutert.

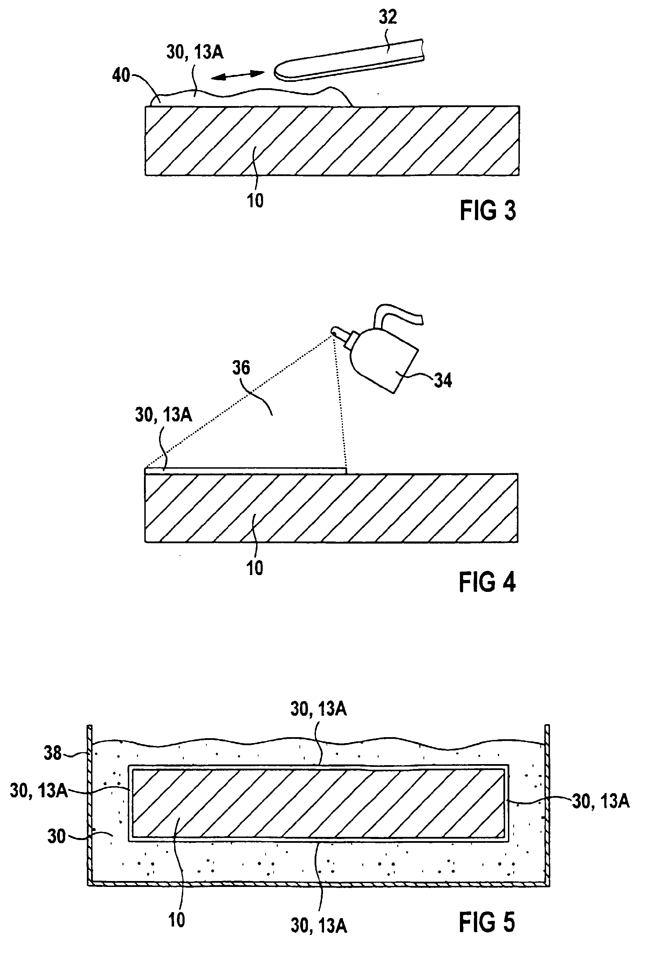

In FIG 3 ist ein Bauteil 10 dargestellt, auf das eine pastöse Suspension 30 mittels eines Spatels 32 aufgetragen wird. Die Suspension 30 enthält das Versiegelungsmaterial 13A und ein Bindemittel 40, welches zu einer zementartigen Aushärtung der Versiegelungsschicht 13 führt.

FIG 4 zeigt die Auftragung der Suspension 30 mittels einer Sprühpistole 34. In einem Sprühkegel 36 wird so die Suspen sion 30 gleichmäßig und zügig auf das Bauteil 10 aufgebracht.

FIG 5 zeigt eine Aufbringung der Suspension 30 auf das Bauteil 10 durch ein Eintauchen des Bauteils 10 in eine mit der Supension 30 gefüllten Wanne 38. Insbesondere bei einer das Bauteil großteils umgebenden Versiegelungsschicht 13 ist ein solches Eintauchen für kurze Fertigungszeiten günstig.

Nach Auftragung der Suspension bildet sich der Schichtverbund der Versiegelungsschicht 13 durch eine Aushärtung, insbesondere bei einer Sinterung, aus. Vorzugsweise geschieht diese Sinterung gleichzeitig mit einer Sinterung des Bauteils 10.

Bei einem Bauteilmaterial 10A auf Basis Aluminiumoxid-Mullit und einer Versiegelungsschicht 13 aus Aluminiumoxid ist die Suspension beispielsweise wie folgt zusammengesetzt:
125 g reaktive Tonerde
25 ml Polyvinylalkohol
250 ml Wasser

Die Suspension 30 wird mittels Dispegierer dispegiert und homogenisiert und anschließend mittels einer Druckluftsprühpistole auf den Bauteilgrundkörper 10B aufgetragen. Die Trocknung erfolgt einen Tag an Luft, einen Tag bei 110 °C und eine Sinterung bei 1500 °C mit einer Stunde Haltezeit.

Bei einer Beschichtung eines Brennkammersteins 10 mit einem spinellhaltigen Bauteilmaterial 10A, wobei die Versiegelungsschicht 13 Spinell ist, ist die Suspension 30 beispielsweise wie folgt zusammengesetzt:
125 g Magnesiumaluminiumspinell
25 ml Polyvinylalkohol
250 ml Wasser

Nach Dispegierung, Homogenisierung und anschließender Auftragung auf den Brennkammerstein 10 erfolgt die Trocknung einen Tag an Luft, einen Tag bei 110 °C und eine Sinterung bei 1600 C mit einer Stunde Haltezeit.

## Patentansprüche

1. Verfahren zur Herstellung eines, ein keramisches Bauteilmaterial (10A) aufweisenden, feuerfesten Bauteils (10) mit einem Bauteilgrundkörper (10B),
bei dem ein Versiegelungmaterial (13A) in einer Suspension (30) auf den Bauteilgrundkörper (10B) aufgebracht und daraus durch anschließendes Aushärten eine Versiegelungsschicht (13) gebildet wird, die ein Ablösen von Partikeln des Bauteilmaterials (10A) mindert.

2. Verfahren nach Anspruch 1,
bei dem der Suspension (30) ein Bindemittel (40) zugegeben wird, welches zementartig zu einer Härtung der Versiegelungsschicht führt.

3. Verfahren nach Anspruch 1 oder 2,
bei dem das Bauteilmaterial (10A) Aluminiumoxid enthält.

4. Verfahren nach Anspruch 3,
bei dem das Bauteilmaterial (10A) Mullit enthält.

5. Verfahren nach einem der vorhergehenden Ansprüche, bei dem das Versiegelungsmaterial (13A) ein Material ausgewählt aus der folgenden Gruppe enthält:
Carbid, Nitrid, Silikat, Oxid.

6. Verfahren nach Anspruch 5,
bei dem das Versiegelungsmaterial (13A) Aluminiumoxid enthält.

7. Verfahren nach einem der vorhergehenden Ansprüche, bei dem zunächt eine Formgebung für den Bauteilgrundkörper (10B) erfolgt und anschließend die Versiegelungsschicht (13) aufgebracht wird, wobei die Aushärtung durch einen das Bauteil (10) sinternden Sinterungsprozeß erfolgt.

8. Verfahren nach einem der vorhergehenden Ansprüche, bei dem die Suspension (30) auf den Bauteilgrundkörper (10B) aufgesprüht wird.

9. Verfahren nach einem der vorhergehenden Ansprüche, bei dem die Suspension (30) auf den Bauteilgrundkörper (10B) aufgestrichen wird.

10. Verfahren nach einem der vorhergehenden Ansprüche, bei dem die Suspension (30) auf den Bauteilgrundkörper (10B) durch ein Eintauchen des Bauteilgrundkörpers (10B) in die Suspension (30) aufgebracht wird.

11. Verfahren nach einem der vorhergehenden Ansprüche, bei dem das Bauteil (10) als ein Brennkammerstein einer Brennkammerauskleidung (7A) ausgeführt wird.

12. Verfahren nach Anspruch 11, bei dem das Bauteil (10) als ein Brennkammerstein einer Brennkammerauskleidung (7A) für eine Gasturbine (1) ausgeführt wird.

13. Keramischer Brennkammerstein (10) einer Brennkammerauskleidung (7A) mit einem keramischen Grundkörper (10B) und einer darauf über eine Supension (30) aufgebrachten Versiegelungsschicht (13) gegen ein Ablösen keramischer Partikel aus dem Grundkörper (10B).
